# EUROPÄISCHE PATENTSCHRIFT

(11) **EP 2 473 381 B1**
(45) Veröffentlichungstag und Bekanntmachung des Hinweises auf die Patenterteilung: **27.12.2017**
(21) Anmeldenummer: 10754275.5
(22) Anmeldetag: 02.09.2010
(51) Int. Cl.: B60R 21/231, B60R 22/48

(54) **BEIFAHRER-FRONTGASSACK**
PASSENGER FRONT AIR BAG
SAC GONFLABLE AVANT POUR PASSAGER

(30) Priorität: 04.09.2009 DE 102009040118
(43) Veröffentlichungstag der Anmeldung: 11.07.2012
(73) Patentinhaber: Autoliv Development AB, 447 83 Vårgårda (SE)
(72) Erfinder: GULDE, Alexander, 85778 Haimhausen (DE); PEIZ, Roland, 86567 Hilgertshausen (DE); KRÄNZLE, Armin, 86911 Diessen (DE); GERISCH, Peter, 85375 Neufahrn (DE); BÖSWIRTH, Reinhard, 85241 Hebertshausen (DE); TAUBERT, Stefan, 86316 Friedberg (DE); SCHOCK, Marc, 85757 Karlsfeld (DE); HOFFMANN, Jens, 82140 Olching (DE); GAWLOWSKA, Anna, 58-508 Lomnica (PL); SKIBINSKI, Michal, 95-200 Pabianice (PL); WIADERNY, Marcin, 54-031 Wroclaw (PL); SOFINSKI, Marek, 55-200 Olawa (PL)
(74) Vertreter: Schön, Thilo
(86) Internationale Anmeldenummer: PCT/EP2010/005382
(87) Internationale Veröffentlichungsnummer: WO 2011/026617

(56) Entgegenhaltungen:
- EP-A1- 1 493 633
- EP-A1- 1 693 256
- EP-B1- 1 983 857
- DE-A1- 19 844 427
- DE-A1-102007 029 650
- US-A- 5 934 701
- US-A1- 2006 103 118
- US-A1- 2006 279 072

## Beschreibung

### Technisches Gebiet der Erfindung

Die Erfindung betrifft einen Beifahrer-Frontgassack nach dem Oberbegriff des Anspruchs 1 sowie ein Fahrzeug mit einem solchen Beifahrer-Frontgassack nach Anspruch 10.

Sogenannte Beifahrer-Frontgassäcke sind im Automobilbau weit verbreitet und dienen dem Schutz des Beifahrers, nämlich insbesondere dem Schutz seines Kopfes, beim einem Frontalzusammenstoß oder einem seitlich versetzten Frontalzusammenstoß. Ein solcher Beifahrer-Frontgassack ist in der Instrumententafel - meist in einem oberen Bereich - angeordnet und entfaltet sich bei Detektion eines Frontalaufpralls zwischen Instrumententafel/Windschutzscheibe und Insassen.

### Stand der Technik

Die Gassackhüllen bisheriger Beifahrer-Frontgassäcke, wie z.B. in der EP 1 693 256 beschrieben, sind sehr großvolumig ausgelegt und decken hierbei den gesamten vor dem Beifahrer liegenden oberen Bereich der Instrumententafel ab. Hierdurch bieten sie sehr guten Schutz, da sowohl Kopf als auch Thoraxbereich vom Beifahrer-Frontgassack aufgefangen werden können. Neben diesem Vorteil, die ein großvolumiger Beifahrer-Frontgassack bietet, ergeben sich jedoch auch zahlreiche Nachteile: Aufgrund des großen Volumens muss ein entsprechend großer und starker Gasgenerator eingesetzt werden, was zunächst ein relativ hohes Gewicht bedeutet, was natürlich stets unerwünscht ist. Weiterhin müssen sich großvolumige Beifahrer-Frontgassäcke sehr schnell entfalten um rechtzeitig ihren vollständigen Entfaltungszustand zu erreichen. Hierdurch kann der Beifahrer-Frontgassack selbst zu einer Gefahr für den Beifahrer werden, wenn sich dieser nicht in seiner Standard-Sitzposition befindet.

Es wird ein großer Aufwand betrieben, um dieses Problem zu lösen, wie die hierzu veröffentlichte sehr umfangreiche Patentliteratur zeigt.

### Gegenstand der Erfindung

Hiervon ausgehend stellt sich die vorliegende Erfindung die Aufgabe, einen Beifahrer-Frontgassack dahingehend weiterzubilden, dass die eben beschriebenen Nachteile behoben oder zumindest abgemildert werden.

Diese Aufgabe wird durch einen Beifahrer-Frontgassack mit den Merkmalen des Anspruchs 1 gelöst. Ein Kraftfahrzeug mit einem solchen Beifahrer-Frontgassack ist in Anspruch 10 angegeben.

Es hat sich durch Versuche herausgestellt, dass bei einem angegurteten Beifahrer derjenige Teil der Gassackhülle des Beifahrer-Frontgassackes, welcher dem Thoraxbereich zugeordnet ist, in vielen Fahrzeuggeometrien eine sehr viel kleinere Bedeutung für den Insassenschutz hat als derjenige Teil der Gassackhülle, welcher dem Kopfbereich oder dem Kopf-Schulterbereich zugeordnet ist. Dies liegt darin begründet, dass der Beckenabschnitt des angelegten Sicherheitsgurtes das Becken nahezu in seiner Ausgangsstellung hält, so dass die Bewegung des Oberkörpers des Beifahrers im Falle eines Frontalaufpralls nach Einsetzen der Gurtkraftbegrenzung im Wesentlichen eine Kippbewegung um das Becken ist. Die Oberkörper-Rückhaltefunktion kann durch die Auslegung des Kraftbegrenzers erreicht werden. Aufgrund der Tatsache, dass die Oberfläche der Instrumententafel vom Kopf-Brust-Bereich des Insassen relativ weit entfernt ist, ist der Beitrag der Rückhaltewirkung, welcher der Beifahrer-Frontgassack für den Thoraxbereich auch bei einsetzender Gurtkraftbegrenzung zur Verfügung stellt, oft gering.

In vielen Ländern, insbesondere in Europa, ist die Anschnallquote auch der Beifahrer inzwischen so hoch, dass man bei Auslegung des Beifahrergassacks von einem angeschnallten Beifahrer ausgehen kann.

Erfindungsgemäß ist die Prallfläche der Gassackhülle deshalb ausschließlich dem Kopfbereich oder dem Kopf- und Schulterbereich des Beifahrers zugeordnet. Somit kann die Gassackhülle des Beifahrer-Frontgassackes so ausgebildet sein, dass sie nur ein relativ kleines Volumen, vorzugsweise nämlich maximal 50 Liter, insbesondere vorzugsweise 35 bis 50 Liter einschließt. In speziellen Anwendungs- und Anforderungsfällen kann auch ein etwas größeres Gassackvolumen um 60 Liter notwendig sein. Dieses etwas größere Volumen (welches aber immer noch kleiner ist als das eines Standard-Beifahrer-Gassacks) kann insbesondere in folgenden Fällen notwendig sein: Zum einen, wenn das Gassackmodul im obersten Bereich der Instrumententafel nahe der Windschutzscheibe angeordnet ist (sogenannter "top mount") und zum anderen, wenn der Frontgassack ein sehr hohes Maß an Seitenschutz bei einem seitlich versetzen Frontalzusammenstoß bieten soll. Um dennoch auch bei einem seitlich versetzten Frontalzusammenstoß einen guten Schutz zu bieten, weist die Prallfläche der Gassackhülle des Beifahrer-Frontgassackes im vollständig expandierten Zustand eine konkave Form derart auf, dass sich ein linker und ein rechter Abschnitt der Prallfläche jeweils weiter in den Innenraum des Kraftfahrzeugs erstrecken als ein mittlerer Abschnitt.

Durch das kleine Gassackvolumen ergibt sich eine erhebliche Gewichtsreduzierung und die Gefährdung eines sich außerhalb seiner Standard-Sitzposition befindenden Beifahrers wird deutlich reduziert.

Wie bereits erwähnt, bietet der erfindungsgemäße Beifahrer-Frontgassack nur einem angegurteten Beifahrer idealen Schutz. Aufgrund der Tatsache, das in vielen Ländern, beispielsweise in Deutschland, die Anschnallquote sehr hoch ist, können die Vorteile, welche der erfindungsgemäße Beifahrer-Frontgassack insbesondere in Bezug auf out-of-position Situationen bietet, die Nachteile in Bezug auf Unfälle mit nicht angeschnalltem Insassen statistisch überwiegen.

Um Unfallsituationen mit einem nicht angeschnallten Beifahrer praktisch ganz auszuschließen, ist es zu bevorzugen, wenn der erfindungsgemäße Beifahrer-Frontgassack nur bei Kraftfahrzeugen mit einem Warnsystem für einen nicht angegurteten Beifahrer eingebaut wird. Solche Warnsysteme sind bekannt und erzeugen bei nicht angeschnalltem Beifahrer ein akustisches Warnsignal.

Bevorzugte Ausführungsformen, insbesondere hinsichtlich der schnitttechnischen Ausgestaltung der Gassackhülle, sind in den Ansprüchen 3 bis 7 angegeben.

Die Erfindung wird nun anhand eines Ausführungsbeispiels mit Bezug auf die Figuren 1 bis 13 näher erläutert. Hierbei zeigen:

### Kurzbeschreibung der Zeichnungen

- Figur 1: Einen unteren Zuschnitt,
- Figur 2: einen oberen Zuschnitt,
- Figur 3: einen weiteren Zuschnitt,
- Figur 4: eine Gassackhülle, die aus den in den Figuren 1 bis 3 gezeigten Zuschnitten zusammengesetzt ist, in einem vollständig expandierten Zustand,
- Figur 5: die Gassackhülle aus Figur 4 in einer Draufsicht aus Richtung A,
- Figur 6: einen schematisierten Schnitt durch einen vorderen Bereich eines Kraftfahrzeugs mit einem Beifahrer-Frontgassack, dessen Gassackhülle im vollständig expandierten Zustand dargestellt ist,
- Figur 7: das in Figur 6 Gezeigte in einer Draufsicht aus Richtung B, jedoch ohne Fahrzeugsitz und Sicherheitsgurt,
- Figur 8: das in Figur 6 Gezeigte beim Eintauchen des Insassen in die Gassackhülle des Frontgassacks,
- Figur 9: das in Figur 8 Gezeigte in einer der Figur 4 entsprechenden Darstellung,
- Figur 9a: das in Figur 9 Gezeigte im Falle eines seitlich versetzten Frontalzusammenstoßes,
- Figuren 10 bis 13: alternative Ausführungsformen des weiteren Zuschnitts,
- Figuren 14a bis 14e: den Herstellungsprozess einer zweite Ausführungsform einer Gassackhülle,
- Figur 15: zwei Zuschnitte für eine dritte Ausführungsform einer Gassackhülle und
- Figur 16: die aus den beiden Zuschnitten der Figur 15 bestehende Gassackhülle im expandierten Zustand.

### Beschreibung bevorzugter Ausführungsformen

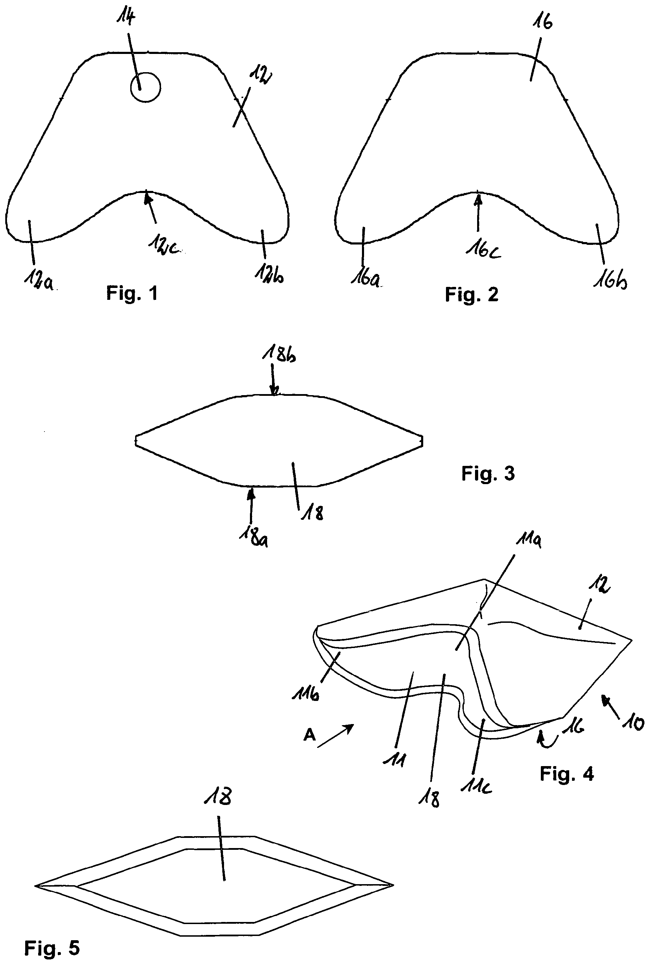

Figuren 1-3 zeigen die Zuschnitte für die Gassackhülle eines Beifahrer-Frontgassacks. Hierbei zeigt die Figur 1 einen unteren Zuschnitt 12, die Figur 2 einen oberen Zuschnitt 16 und die Figur 3 einen weiteren Zuschnitt 18. Unterer Zuschnitt 12 und oberer Zuschnitt 16 sind deckungsgleich mit der Ausnahme, dass der untere Zuschnitt 12 eine Gasgeneratoröffnung 14 aufweist. In der Regel ist eine Ausströmöffnung vorhanden, welche beispielsweise als Öffnung im oberen Zuschnitt 16 ausgestaltet sein kann (nicht dargestellt). Unterer Zuschnitt 12 und oberer Zuschnitt 16 weisen jeweils einen ersten nach vorne ragenden Abschnitt 12a, 16a und einen zweiten nach vorne ragenden Abschnitt 12b, 16b auf. Zwischen diesen beiden Abschnitten erstreckt sich jeweils die konkave Kante 12c beziehungsweise 16c. Der weitere Zuschnitt 18 ist im Wesentlichen linsenförmig, also doppel-konvex mit einer unteren Kante 18a und einer oberen Kante 18b.

Das Zusammennähen der eben beschriebenen drei Zuschnitte erfolgt derart, dass die untere Kante 18a des weiteren Zuschnitts 18 mit der konkaven Kante 12c des unteren Zuschnitts 12 und die obere Kante 18b des weiteren Zuschnitts 18 mit der konkaven Kante 16c des oberen Zuschnitts 16 vernäht wird. Die verbleibenden Kantenabschnitte des unteren Zuschnitts 12 und des oberen Zuschnitts 16 werden miteinander vernäht, so dass die Gassackhülle 10 geschlossen ist und einen Gasraum umgibt. Anstatt Nähen können natürlich auch andere Verbindungstechniken, wie insbesondere Schweißen oder Kleben angewendet werden.

Die Figur 4 zeigt die Gassackhülle 10 des Beifahrer-Frontgassackes 5 im fertig vernähten expandierten Zustand. Die Figur 5 zeigt die Ansicht aus Richtung A in Figur 4. Man sieht, dass der weitere Zuschnitt 18 praktisch identisch mit der Prallfläche 11 ist und dass die Prallfläche eine konkave Form derart aufweist, dass sich im montierten Zustand ein linker und ein rechter Abschnitt 11b, 11c weiter in den Innenraum des Kraftfahrzeugs erstrecken als ein mittlerer Abschnitt 11a der Prallfläche 11. Man erkennt weiterhin, dass aufgrund der Linsenform des weiteren Zuschnittes 18 die Prallfläche in der Mitte ihre maximale Höhe aufweist. Oberer und unterer Zuschnitt 12, 16 bilden die Seitenflächen der Gassackhülle.

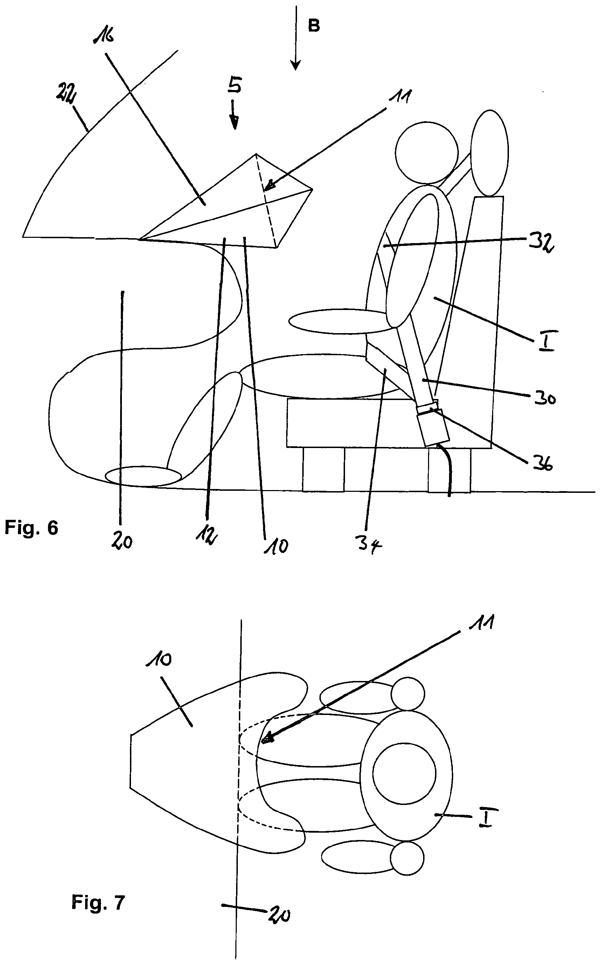

Die Figuren 6 und 7 zeigen eine Gassackhülle 10, wie sie eben beschrieben wurde als an der Instrumententafel eines Kraftfahrzeugs montierten Beifahrer-Frontgassack 5 in vollständig expandiertem Zustand. Man sieht, dass der untere Zuschnitt 12 abschnittsweise auf der Oberfläche der Instrumententafel 20 aufliegt und dass sich die Gassackhülle 10 von hier aus ins Innere des Kraftfahrzeugs in Richtung des Insassen I erstreckt. Hierbei ist die Prallfläche 11 der expandierten Gassackhülle vollständig oberhalb der Instrumententafel positioniert und somit auch ausschließlich dem Kopf des Insassen I zugeordnet.

Wie man der Figur 6 entnimmt, befindet sich der zu schützende Insasse in einem angeschnallten Zustand, nämlich mittels eines Sicherheitsgurtes 30 welcher einen Schulterabschnitt 32 und einen Beckenabschnitt 34 aufweist. Schulterabschnitt 32 und Beckenabschnitt 34 sind durch eine Gurtzunge 36 voneinander getrennt. Diese Gurtzunge ist vorzugsweise so ausgebildet, dass sie bei Überschreiten einer vorbestimmten Zugkraft im Gurtband blockiert und somit Schulterabschnitt und Beckenabschnitt des Sicherheitsgurtes voneinander entkoppelt. Eine solche Gurtzunge ist beispielsweise in der EP 1 983 857 B1 beschrieben, auf deren Offenbarungsgehalt hiermit explizit verwiesen wird. Hierdurch kann sich die Länge des Beckenabschnitts auch bei einsetzender Gurtkraftbegrenzung nicht erhöhen, so dass das gewünschte In-Position-Halten des Beckens noch verbessert wird.

Um sicherzustellen, dass der Insasse angeschnallt ist, ist vorzugsweise ein Erkennungssystem (nicht dargestellt) vorhanden, welches erkennt, ob ein Insasse auf dem Beifahrersitz sitzt und einen Warnton erzeugt, falls ein Insasse erkannt wird und dieser nicht angeschnallt ist.

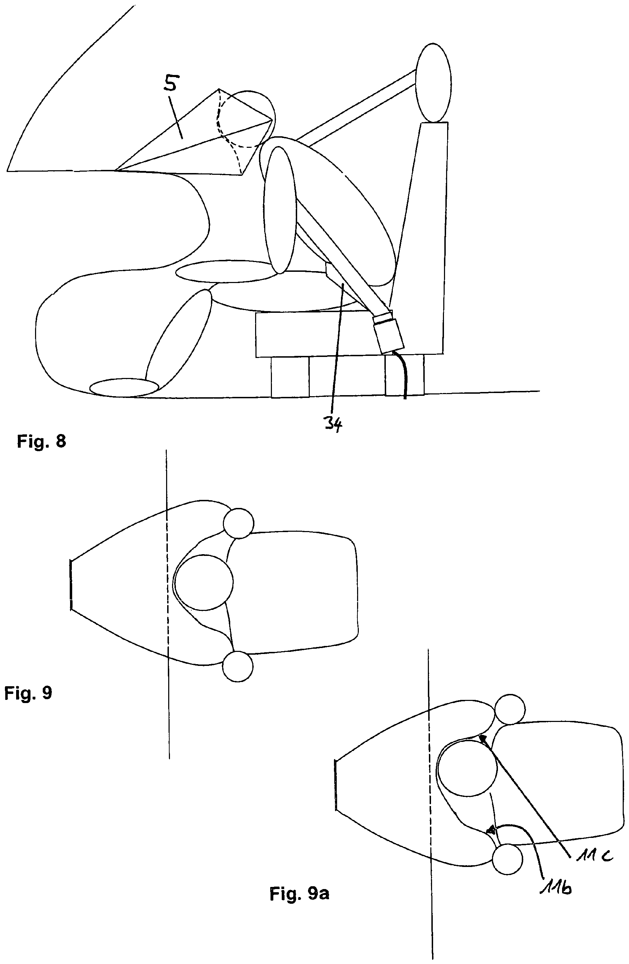

Die Figuren 8 und 9 zeigen das in den Figuren 6 beziehungsweise 7 Gezeigte bei Eintauchen des Insassen I in die Gassackhülle 10, nämlich in die Prallfläche 11. Man sieht, dass sich das Becken des Insassen I aufgrund des Beckenabschnittes 34 des Sicherheitsgurtes 30 im Wesentlichen nicht verschiebt, so dass der Oberkörper des Insassen I nach Einsetzen der Gurtkraftbegrenzung im Wesentlichen eine nach vorne gehende Kippbewegung durchführt, so dass der Kopf das vorderste Körperteil des Oberkörpers ist und nur dieser vom Beifahrer-Frontgassack 5 aufgefangen wird.

Aufgrund der konkaven Form der Prallfläche 11 wird der Kopf des Insassen auch dann sicher aufgefangen, wenn er aufgrund eines seitlich versetzten Aufpralles nicht exakt auf die Mitte der Prallfläche auftrifft, wie dies in Figur 9a zu sehen ist.

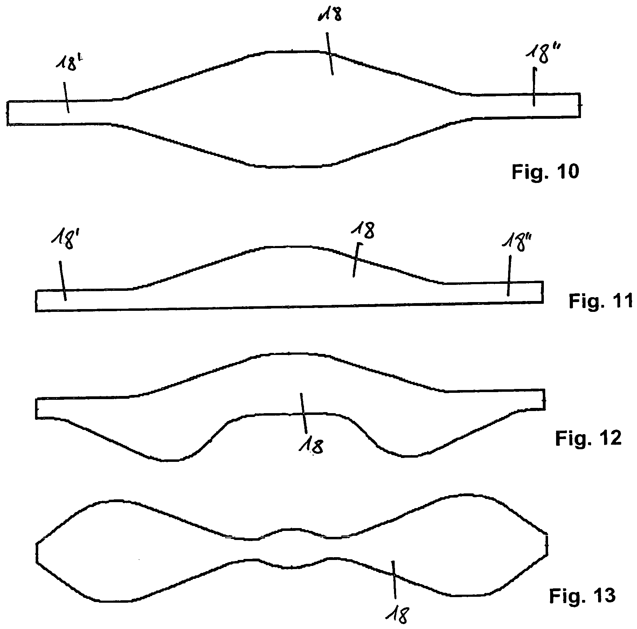

Die Figuren 10 bis 13 zeigen verschiedene alternative Formen für den weiteren Zuschnitt 18. Wie man insbesondere den Figuren 10 und 11 entnimmt, kann der weitere Zuschnitt 18 Seitenbereiche 18, 18" aufweisen, welche nicht zur Prallfläche gehören, sondern welche sich im montierten und expandierten Zustand der Gassackhülle im wesentlichen parallel zur Fahrzeuglängsrichtung erstrecken und somit einen Teil der Seitenflächen der Gassackhülle bilden.

Den Figuren 12 und 13 entnimmt man, dass der weitere Zuschnitt stark konturiert sein kann, wodurch insbesondere eine gute Anpassung an die Oberflächenform der Instrumententafel erreicht werden kann.

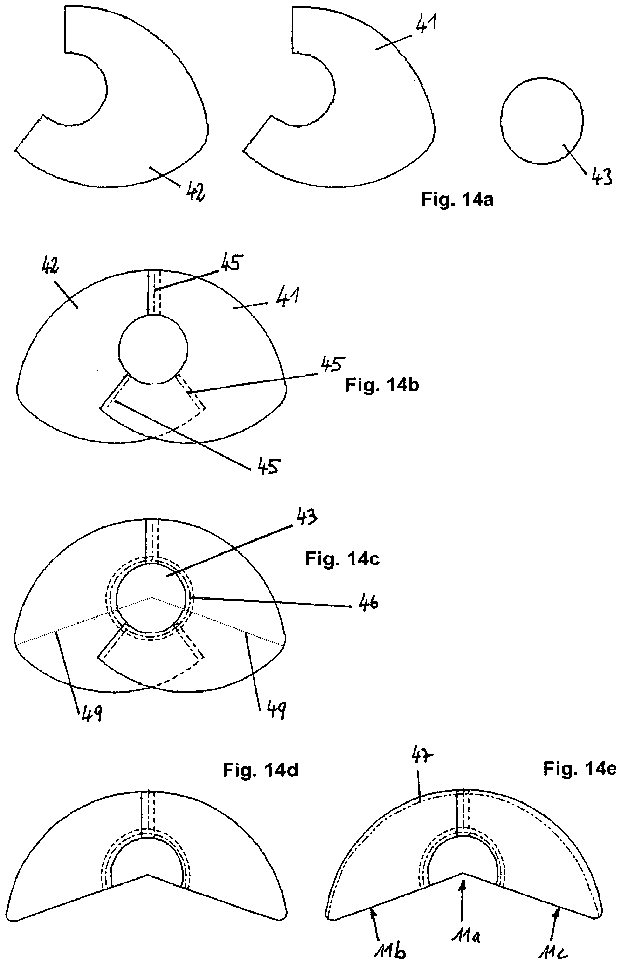

Die Figuren 14a bis 14e zeigen eine zweite Ausführungsform einer Gassackhülle anhand ihres Herstellungsprozesses. Auch diese Gassackhülle besteht aus drei Zuschnitten (Fig. 14a), wobei zwei Zuschnitte 41, 42 deckungsgleich sind, jedoch nicht obere und untere, sondern eher linke und rechte Zuschnitte sind. Die beiden Zuschnitte 41, 42 sind deckungsgleich in einer Art Hufeisenform ausgebildet und weisen jeweils eine Einbuchtung auf. Der dritte Zuschnitt 43 ist im gezeigten Ausführungsbeispiel rund.

Zunächst werden die beiden ersten Zuschnitte 41, 42 derart aneinander gelegt, dass die Einbuchtungen eine kreisförmige Ausnehmung bilden; hierbei überlappt der erste Zuschnitt 41 den zweiten Zuschnitt 42 abschnittsweise. Verdeckte Linien sind gestrichelt dargestellt. In diesem Zustand werden die beiden ersten Zuschnitte mittels der ersten Nähte 45 miteinander verbunden. Diese gestrichpunktet dargestellten ersten Nähte sind Schernähte (Fig. 14b).

Nun wird die kreisförmige Ausnehmung mittels des dritten Zuschnitts 43 verschlossen, wozu dieser mittels der zweiten Naht 46 angenäht wird. Diese Naht ist ebenfalls eine Schernaht und gestrichpunktet dargestellt. Es ist jedoch auch möglich, diese Naht als Schälnaht auszubilden (Fig. 14c).

Das nun entstandene Werkstück wird entlang der in der Figur 14c gezeigten Faltlinien 49 (gepunktet dargstellt) gefaltet (Fig. 14d) und mittels der dritten, als Schälnaht ausgebildeten Naht 47 (mit dem Muster Punkt-Punkt-Strich dargestellt) randseitig geschlossen (Fig. 14e). Hierdurch erhält die Prallfläche 11 die gewünschte konkave Form mit linkem Abschnitt 11b, rechtem Abschnitt 11c und mittlerem Abschnitt 11a. Die Figur 14e ist eine Ansicht von oben.

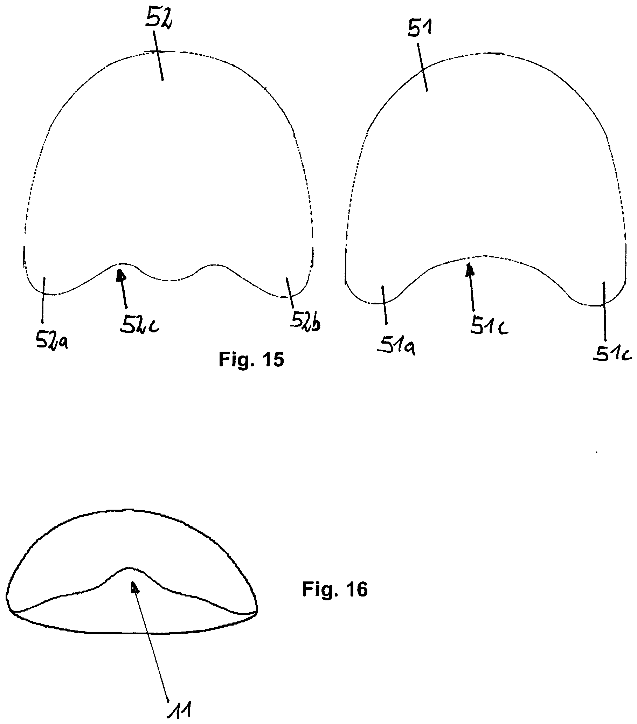

Die Figuren 15 und 16 zeigen eine dritte Ausführungsform einer Gassackhülle. Diese besteht aus zwei Zuschnitten, welche als vierte und fünfte Zuschnitte 51, 52 bezeichnet sind und, ähnlich wie in der ersten Ausführungsform, obere und untere Zuschnitte sind. Die Zuschnitte sind nicht deckungsgleich, sondern die jeweils vordere Kante 51c, 52c, ist beim vierten Zuschnitt 51 konkav und beim fünften Zuschnitt 52 gewellt. Auch diese beiden Zuschnitte weisen nach vorne ragende Abschnitte 51a, 51b; 52a, 52b auf. Die beiden Zuschnitte werden ringsum verbunden, beispielsweise vernäht. Im expandieretn Zustand, wie er in Figur 16 angedeutet ist, ergibt sich eine konkave Prallfläche 11.

### Bezugszeichenliste

- 5: Beifahrer-Frontgassack
- 10: Gassackhülle
- 11: Prallfläche
- 11a: mittlerer Abschnitt
- 11b: linker Abschnitt
- 11c: rechter Abschnitt
- 12: unterer Zuschnitt
- 12a: erster nach vorne ragender Abschnitt
- 12b: zweiter nach vorne ragender Abschnitt
- 12c: konkave Kante
- 14: Gasgeneratoröffnung
- 16: oberer Zuschnitt
- 16a: erster nach vorne ragender Abschnitt
- 16b: zweiter nach vorne ragender Abschnitt
- 16c: konkave Kante
- 18: weiterer Zuschnitt
- 18a: untere Kante
- 18b: obere Kante
- 20: Instrumententafel
- 22: Windschutzscheibe
- 25: Fahrzeugsitz
- 30: Sicherheitsgurt
- 32: Schulterabschnitt
- 34: Beckenabschnitt
- 36: Gurtzunge
- 41: erster Zuschnitt
- 42: zweiter Zuschnitt
- 43: dritter Zuschnitt
- 45: erste Naht
- 46: zweite Naht
- 47: dritte Naht
- 49: Faltlinie
- 51: vierter Zuschnitt
- 51a: erster nach vorne ragender Abschnitt
- 51b: zweiter nach vorne ragender Abschnitt
- 51c: vordere Kante
- 52: fünfter Zuschnitt
- 52a: erster nach vorne ragender Abschnitt
- 52b: zweiter nach vorne ragender Abschnitt
- 52c: vordere Kante
- I: Insasse

## Patentansprüche

1. Beifahrer-Frontgassack (5) zur Anordnung in der Instrumententafel (20) eines Kraftfahrzeugs,
mit einer Gassackhülle (10), welche eine Prallfläche (11) und sich von der Prallfläche (11) erstreckende Seitenflächen aufweist, wobei die Prallfläche (11) bei vollständig expandierter, von äußeren Kräften freier Gassackhülle (10) eine konkave Form derart aufweist, dass sich ein linker und ein rechter Abschnitt (11b, 11c) der Prallfläche (11) jeweils weiter in den Innenraum des Kraftfahrzeugs erstrecken als ein mittlerer Abschnitt (11a),
**dadurch gekennzeichnet, dass** die Prallfläche (11) ausschließlich dem Kopfbereich oder dem Kopf- und Schulterbereich des Beifahrers (I) zugeordnet ist und dass die vollständig expandierte Gassackhülle (10) ein Volumen von maximal 60 Liter umschließt.

2. Beifahrer-Frontgassack nach Anspruch 1, **dadurch gekennzeichnet, dass** die vollständig expandierte Gassackhülle (10) ein Volumen von 35 bis 50 Liter umschließt.

3. Beifahrer-Frontgassack nach einem der vorangehenden Ansprüche, **dadurch gekennzeichnet, dass** die Seitenflächen wenigstens einen oberen und einen unteren Zuschnitt (12, 16) aufweisen, wobei wenigstens einer dieser beiden Zuschnitte (12, 16) jeweils eine konkave Kante (12c, 16c) aufweisen, welche der Prallfläche (11) ihre konkave Form geben.

4. Beifahrer-Frontgassack nach Anspruch 3, **dadurch gekennzeichnet, dass** die Prallfläche (11) ein weiterer Zuschnitt (18) oder ein Teil eines weiteren Zuschnitts (18) ist, welcher zwischen oberem und unterem Zuschnitt (12, 16) gehalten ist.

5. Beifahrer-Frontgassack nach Anspruch 4, dadurch gekenzeichnet, dass der weitere Zuschnitt (18) eine nicht konstante Höhe aufweist.

6. Beifahrer-Frontgassack nach Anspruch 5, **dadurch gekennzeichnet, dass** der weitere Zuschnitt (18) im Bereich des mittleren Abschnitts der Prallfläche seine maximale Höhe aufweist.

7. Beifahrer-Frontgassack nach einem der Ansprüche 3 bis 6, **dadurch gekennzeichnet, dass** der untere Zuschnitt (12) bei vollständig expandierter Gassackhülle zumindest abschnittsweise auf der Instrumententafel (20) aufliegt.

8. Beifahrer-Frontgassack nach einem der Ansprüche 2 bis 7, **dadurch gekennzeichnet, dass** der untere Zuschnitt eine Öffnung (Gasgeneratoröffnung 14) für einen Inflator aufweist.

9. Kraftfahrzeug mit einem Beifahrer-Frontgassack nach einem der vorangehenden Ansprüche mit
genau einem Beifahrer-Frontgassack (5), wobei dieser Beifahrer-Frontgassack eine Gassackhülle (10) aufweist, welche eine Prallfläche (11) und sich von der Prallfläche (11) erstreckende Seitenflächen aufweist, wobei die Prallfläche (11) ausschließlich dem Kopfbereich oder dem Kopf- und Schulterbereich des Beifahrers (I) zugeordnet ist und wobei die Prallfläche (11) bei vollständig expandierter, von äußeren Kräften freier Gassackhülle (10) eine konkave Form derart aufweist, dass sich ein linker und ein rechter Abschnitt (11b, 11c) der Prallfläche (11) jeweils weiter in den Innenraum des Kraftfahrzeugs erstrecken als ein mittlerer Abschnitt (11a) und einem Sicherheitsgurtsystem für den Beifahrer,
wobei sich bei vollständig expandierter Gassackhülle (10) die Prallfläche (11) vollständig oberhalb der Instrumententafel (20) befindet.

10. Kraftfahrzeug nach Anspruch 9, **dadurch gekennzeichnet, dass** es ein Erkennungssystem für einen nicht angeschnallten Beifahrer aufweiset, welches bei Erkennen eines nicht angeschnallten Beifahrers ein Warnsignal erzeugt.

11. Kraftfahrzeug nach einem der Ansprüche 9 oder 10, **dadurch gekennzeichnet, dass** die Gurtzunge des Sicherheitsgurtsystems den Beckenabschnitt (34) und den Schulterabschnitt (32) des Sicherheitsgurtes (30) bei Überschreiten einer vorbestimmten Grenzkraft im Sicherheitsgurt voneinander entkoppelt.

## Claims

1. A passenger front airbag (5) for arrangement in the instrument panel (20) of a motor vehicle
having an airbag envelope (10), which has an impact surface (11) and side surfaces extending from the impact surface (11), wherein, when the airbag envelope (10) is fully expanded and free from external forces, the impact surface (11) has a concave shape such that a left and a right section (11b, 11c) of the impact surface (11) each extend further into the interior of the motor vehicle than a center section (11a),
**characterized in that** the impact surface (11) is associated solely with the head region or the head and shoulder region of the passenger (I) and that the fully expanded airbag sleeve (10) encompasses a maximum volume of 60 liters.

2. The passenger front airbag according to claim 1, **characterized in that** the fully expanded airbag sleeve (10) encompasses a volume of 35 to 50 liters.

3. The passenger front airbag according to one of the preceding claims, **characterized in that** the side surfaces have at least one upper and one lower pre-cut section (12, 16), wherein at least one of these two pre-cut sections has one concave edge (12c, 16c) which gives the impact surface (11) its concave shape.

4. The passenger front airbag according to claim 3, **characterized in that** the impact surface (11) is a further pre-cut section (18) or part of a further pre-cut section (18) which is retained between the upper and lower pre-cut section (12, 16).

5. The passenger front airbag according to claim 4, **characterized in that** the further pre-cut section (18) does not have a constant height.

6. The passenger front airbag according to claim 5, **characterized in that** the further pre-cut section (18) has its maximum height in the region of the center section.

7. The passenger front airbag according to one of claims 3 to 6, **characterized in that,** when the airbag sleeve is fully expanded, the lower pre-cut section (12) rests at least in sections on the instrument panel (20).

8. The passenger front airbag according to one of claims 2 to 7, **characterized in that** the lower pre-cut section has an opening (gas generator opening 14) for an inflator.

9. A vehicle having a passenger front airbag according to one of the preceding claims having
exactly one passenger front airbag (5), wherein this passenger front airbag has an airbag envelope (10) which has an impact surface (11) and side surfaces extending from the impact surface (11), wherein the impact surface (11) is associated solely with the head region or the head and shoulder region of the passenger (I), and wherein, when the airbag envelope (10) is fully expanded and free from external forces, the impact surface (11) has a concave shape such that a left and a right section (11b, 11c) of the impact surface (11) each extend further into the interior of the motor vehicle than a center section (11a), and a safety belt system for the passenger,
wherein the impact surface (11) is located entirely above the instrument panel (20) when the airbag (10) is fully expanded.

10. The vehicle according to claim 9, **characterized in that** it has a detection system for an unbelted passenger which generates a warning signal on detecting an unbelted passenger.

11. The motor vehicle according to one of claims 9 or 10, **characterized in that** the belt tongue of the safety belt system disconnects the lap section (34) and the shoulder section (32) of the safety belt (30) from one another when a predetermined limiting force in the safety belt is exceeded

## Revendications

1. Coussin gonflable frontal pour passager (5) pour agencement dans le tableau de bord (20) d'un véhicule automobile,
doté d'une enveloppe (10), laquelle présente une surface d'impact (11) et des surfaces latérales s'étendant à partir de la surface d'impact (11), dans lequel la surface d'impact (11), lorsque complètement expansée par les forces extérieures d'enveloppes de coussins gonflables libres, présente une forme concave de telle sorte qu'une section gauche et droite (11b, 11c) de la surface d'impact (11) s'étendent respectivement plus dans l'habitacle du véhicule qu'une section centrale (11a),
**caractérisé en ce que** la surface d'impact (11) est exclusivement associée à la partie de la tête ou à la partie de la tête et de l'épaule du passager (I) et que l'enveloppe de sac gonflable (10) complètement expansée comprend un volume de 60 litres maximum.

2. Coussin gonflable frontal pour passager selon la revendication 1, **caractérisé en ce que** l'enveloppe de sac gonflable (10) complètement expansée comprend un volume de 35 à 50 litres.

3. Coussin gonflable frontal pour passager selon l'une quelconque des revendications précédentes, **caractérisé en ce que** les surfaces latérales présentent au moins une coupe supérieure et une coupe inférieure (12, 16), dans lequel au moins une de ces deux coupes (12, 16) présente respectivement un bord concave (12c, 16c) qui confère sa forme concave à la surface d'impact (11).

4. Coussin gonflable frontal pour passager selon la revendication 3, **caractérisé en ce que** la surface d'impact (11) est une autre coupe (18) ou une partie d'une autre coupe (18), laquelle est maintenue entre la coupe supérieure et la coupe inférieure (12, 16).

5. Coussin gonflable frontal pour passager selon la revendication 4, **caractérisé en ce que** l'autre coupe (18) présente une hauteur non-constante.

6. Coussin gonflable frontal pour passager selon la revendication 5, **caractérisé en ce que** l'autre coupe (18) présente sa hauteur maximale au niveau de la section centrale de la surface d'impact.

7. Coussin gonflable frontal pour passager selon l'une quelconque des revendications 3 à 6, **caractérisé en ce que** la coupe inférieure (12) repose au moins par section sur le tableau de bord (20) lorsque l'enveloppe de coussin gonflable est complètement expansée.

8. Coussin gonflable frontal pour passager selon l'une quelconque des revendications 2 à 7, **caractérisé en ce que** la coupe inférieure présente une ouverture (ouverture de générateur de gaz 14) pour un gonfleur.

9. Véhicule automobile doté d'un coussin gonflable frontal pour passager selon l'une quelconque des revendications précédentes doté exactement d'un coussin gonflable frontal pour passager (5), dans lequel ce coussin gonflable frontal pour passager présente une enveloppe de coussin gonflable (10), laquelle présente une surface d'impact (11) et des surfaces latérales s'étendant à partir de la surface d'impact (11), dans lequel la surface d'impact (11) est exclusivement associée à la partie de la tête ou à la partie de la tête et de l'épaule du passager (I) et dans lequel la surface d'impact (11), lorsque complètement expansée par les forces extérieures d'enveloppes de coussins gonflables libres, présente une forme concave de telle sorte qu'une section gauche et droite (11b, 11c) de la surface d'impact (11) s'étendent respectivement plus dans l'habitacle du véhicule qu'une section centrale (11a) et d' un système de ceinture de sécurité pour le passager, dans lequel la surface d'impact (11) se trouve complètement au-dessus du tableau de bord (20) lorsque l'enveloppe de coussin gonflable (10) est complètement expansée.

10. Véhicule automobile selon la revendication 9, **caractérisé en ce qu'il** présente un système de détection pour un passager non-attaché, lequel produit un signal d'alarme en cas de détection d'un passager non-attaché.

11. Véhicule automobile selon l'une quelconque des revendications 9 ou 10, **caractérisé en ce que** la languette de ceinture du système de ceinture de sécurité découple la section ventrale (34) et la section épaule (32) de la ceinture de sécurité (30) l'un de l'autre lors du dépassement d'une force limite prédéterminée dans la ceinture de sécurité.
